# EUROPÄISCHE PATENTSCHRIFT

(11) **EP 1 643 100 B1**
(45) Veröffentlichungstag und Bekanntmachung des Hinweises auf die Patenterteilung: **28.06.2017**
(21) Anmeldenummer: 05108885.4
(22) Anmeldetag: 26.09.2005
(51) Int. Cl.: F01K 23/10, C01B 3/34, F02C 3/30, C01B 13/02, B01D 53/22

(54) **Kraftwerksanlage und zugehöriges Betriebsverfahren**
Power plant and associated operating method
Centrale et méthode associée d'opération

(30) Priorität: 29.09.2004 DE 102004047807
(43) Veröffentlichungstag der Anmeldung: 05.04.2006
(73) Patentinhaber: Ansaldo Energia IP UK Limited, London W1G 9DQ (GB)
(72) Erfinder: Bücker, Dominikus, 80338, München (DE); Griffin, Timothy, 5408, Ennetbaden (CH); Schimkat, Armin, 69496, Hirschberg (DE)
(74) Vertreter: Bernotti, Andrea

(56) Entgegenhaltungen:
- WO-A1-01/79754
- WO-A1-2004/042200
- US-A- 5 562 754
- US-A1- 2002 127 177
- US-B1- 6 503 296
- US-B1- 6 786 952

## Beschreibung

### Technisches Gebiet

Die Erfindung betrifft ein Verfahren zum Betreiben einer Kraftwerksanlage. Die Erfindung betrifft außerdem eine Kraftwerksanlage zur Durchführung dieses Verfahrens.

### Stand der Technik

Die weltweite Stromerzeugung erfolgt zu einem signifikanten Anteil auf der Basis von Verbrennungsreaktionen, bei denen fossile Brennstoffe verbrannt werden. Soweit dies vorhersagbar ist, wird dies auch zukünftig der Fall sein. Zum einen ist jedoch die Verbrennung fossiler Brennstoffe untrennbar mit der Herstellung von Kohlendioxid verbunden. Zum andern wird die Erhöhung der Kohlendioxid-Konzentration in der Atmosphäre als Hauptgrund für die globale Erwärmung angesehen. Um einen umweltfreundlichen Einsatz der fossilen Brennstoffe erreichen zu können, sind vielfältige Maßnahmen bekannt, mit deren Hilfe die Emissionen von Schadstoffen und Treibhausgasen reduziert werden können. Beispielsweise können Treibhausgasemissionen dadurch reduziert werden, dass Kraftwerksanlagen ökonomischer betrieben werden, indem deren Wirkungsgrad erhöht wird. Des weiteren führt die Verwendung von Brennstoffen, die ein relativ hohes Wasserstoff/Kohlenstoff-Verhältnis aufweisen, zu einer reduzierten Treibhausgas-Emission. Treibstoffe mit hohem Wasserstoff-Kohlenstoff-Verhältnis, wie z.B. Erdöl und Erdgas, sind jedoch in einigen Gebieten der Erde nicht oder nur beschränkt verfügbar, was auf geographische und/oder politische Gründe zurückführen ist. Beispielsweise verfügen die USA und China jeweils über große Kohlereserven, wodurch dort dieser Brennstoff entsprechend preiswert ist. Dementsprechend wird in diesen Gebieten die Herstellung von Strom basierend auf der Verbrennung von Kohle eine relativ große Bedeutung beibehalten, so dass Maßnahmen für die Senkung der Kohlendioxid-Emissionen benötigt werden.

Aus der WO 2004/042200 A1 ist eine Kraftwerksanlage bekannt, die einen Verdichter, eine Turbine und eine Brenneranordnung mit einem Vorbrenner und einem Nachbrenner aufweist. Des weiteren ist eine Sauerstoffentziehungseinrichtung vorgesehen, die den Verbrennungsabgasen des Vorbrenners einen Teil des darin enthaltenen Sauerstoffs entziehen kann. Mit Hilfe einer Spülgaseinrichtung kann der dem Verbrennungsabgas des Vorbrenners entzogene Sauerstoff mittels eines Spülgases aus der Sauerstoffentziehungseinrichtung abgeführt werden. Durch die Unterteilung der Brenneranordnung in einen Vorbrenner und einen Nachbrenner und dadurch, dass dem Verbrennungsabgas des Vorbrenners ein Teil des darin enthaltenen Sauerstoffgases entzogen wird, kann bei diesem Verbrennungsprozess somit neben heißen Verbrennungsabgasen, die in der Turbine entspannt werden können, zusätzlich gasförmiger Sauerstoff hergestellt werden, der dann in grundsätzlich beliebiger Weise genutzt werden kann. Die Anordnung der Sauerstoffentziehungseinrichtung zwischen den beiden Brennern gewährleistet, dass die Sauerstoffentziehungseinrichtung bei vergleichsweise hohen, jedoch nicht zu hohen Temperaturen arbeiten kann, die über die Verbrennungsabgase des Vorbrenners bereitgestellt werden. In der anschließenden Nachverbrennung erfolgt dann eine weitere Temperaturerhöhung, um ein Verbrennungsabgas mit besonders hohem Energieinhalt der Turbine zuführen zu können.

Bei der bekannten Kraftwerksanlage wird als Spülgas ein Gemisch aus Erdgas und Wasserdampf genutzt. Die Sauerstoffentziehungseinrichtung dient bei der bekannten Kraftwerksanlage gleichzeitig als Teiloxidationsreaktor, der das zugeführte Erdgas zumindest in Wasserstoff und Kohlenmonoxid konvertiert.

Die Sauerstoffentziehungseinrichtung ist bei der bekannten Kraftwerksanlage somit einer relativ hohen Temperaturbelastung ausgesetzt, was die Lebenszeit der Sauerstoffentziehungseinrichtung verkürzt.

Eine Ausführungsart einer gattungsgemäßen Sauerstoffentziehungseinrichtung mit integrierter Brennkammer zwecks Erwärmung des die Permeatseite beaufschlagenden Spülgases offenbart US 2002/121177 A1 (siehe daselbst Fig. 6). Fig. 6 zeigt einen Reaktor mit einem Strömungspfad für das sauerstoffabgebende Medium sowie einen Strömungspfad für das Permeat und das Spülmedium, beide Strömungspfade durch eine Sauerstofftransportmembran voneinander getrennt. In den Strömungspfad für das Spülmedium, in der Regel Wasserdampf, ist eingangsseitig eine Brennkammer integriert. Durch direkte Einspeisung von Brennstoff und Sauerstoff und deren exothermer Oxidationsreaktion wird das Spülgas auf die notwendige Prozesstemperatur erhitzt. Zwangsläufig wird das Spülgas durch die Verbrennungsprodukte verunreinigt.
Alternativ ist in diesem Dokument eine räumliche Entkopplung der Prozesse der Sauerstoffabtrennung und des Prozesses des Aufheizens des Spülgases dergestalt offenbart, dass der in einem Gehäuse untergebrachten Membrantrennzone eine in einem separaten Gehäuse untergebrachte Brennkammer vorgeschaltet ist (siehe Fig. 5). In das durch diese Brennkammer geleitete Spülgas werden wiederum direkt ein Brennstoff und Sauerstoff eingespeist und verbrannt. Das entstehende erhitzte Gasgemisch wird auf die Permeatseite der Sauerstoffentzieheinrichtung eingeleitet. Als Spülgas fungiert hierbei also, ebenso wie bei den vorgenannten Ausführungsarten, ein Gemisch aus einem Inertgas, in der Regel Wasserdampf, und dem Oxidationsprodukt, in der Regel Kohlendioxid.
Es ist ein Nachteil der vorgenannten Verfahren, dass die Oxidationsprodukte unmittelbar mit der Membran in Kontakt treten. Dies beschränkt das Spektrum möglicher einzusetzender Brennstoffe auf solche von hoher Qualität und Reinheit, um eine Kontamination der Membran durch Schwefel, Schwermetalle oder andere Verunreinigungen zu vermeiden. Der Einsatz zunehmend interessanter werdender Brennstoffe, wie Ölsand, Kohle, verunreinigte flüssige oder gasförmige Brennstoffe, scheidet damit aus.

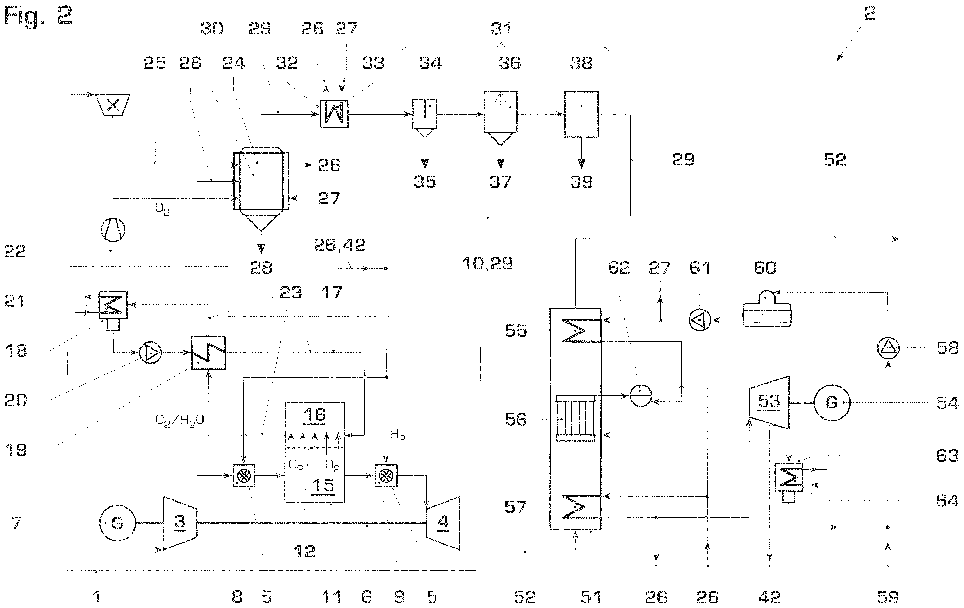

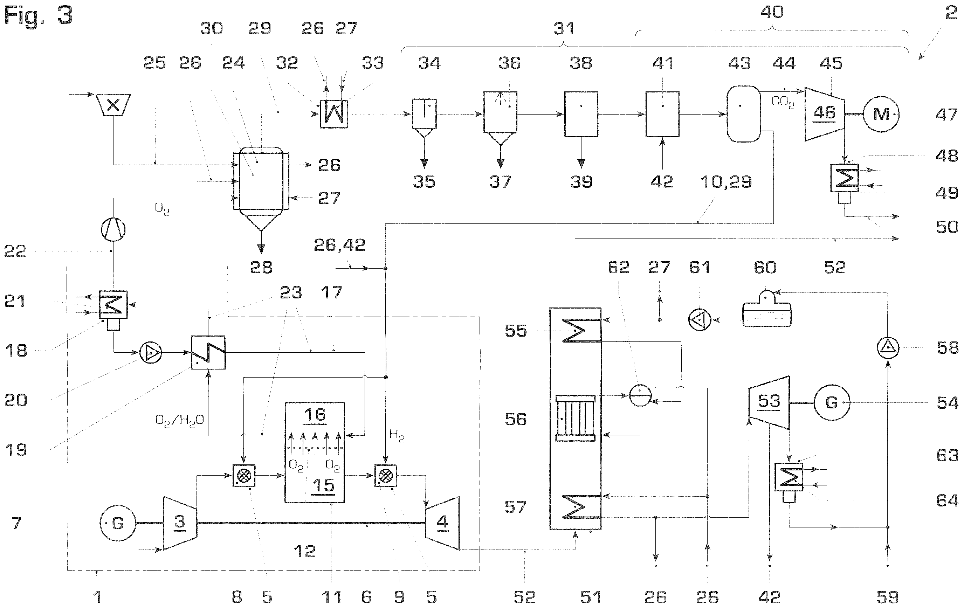

In einem weiteren bekannten Verfahren, gemäß US 5562754, wird dieser Nachteil der vorgenannten Verfahren dadurch vermieden, dass das inerte Spülgas, auch hier Wasserdampf, in einem der Membrantrennzone vorgeschalteten Wärmeübertrager mittels indirekter Wärmeübertragung auf Prozesstemperatur aufgeheizt wird (siehe Fig. 2).
In einer alternativen Ausführungsart, die auf den Einsatz von Spülgas gänzlich verzichtet, wird der gewonnene Sauerstoff mittels eines Gebläses von der Permeatseite der Sauerstoffentziehungseinrichtung abgesaugt (siehe Fig. 3).

### Darstellung der Erfindung

Die Erfindung, wie sie in den Ansprüchen gekennzeichnet ist, beschäftigt sich mit dem Problem, die Kraftwerksanlage gemäß WO 2004/042200 A1 dahingehend weiterzuentwickeln, dass neben einer Reduktion der thermischen Belastung der Sauerstoffentziehungseinrichtung eine direkte Kontaktierung des genutzten Brennstoffs mit der Sauerstoffentziehungseinrichtung ausbleibt.

Erfindungsgemäß wird dieses Problem durch die Gegenstände der unabhängigen Ansprüche 1 und 15 gelöst. Vorteilhafte Ausführungsformen sind Gegenstand der abhängigen Ansprüche.
Die vorliegende Erfindung beruht auf dem allgemeinen Gedanken, das Verfahren und die Kraftwerksanlage gemäß WO 2004/042200 mit einem Synthesegasgenerator zu koppeln, der aus einem Brennstoff und aus Sauerstoffgas zusammen mit Wasserdampf ein Wasserstoffgas enthaltendes Synthesegas erzeugt.
Zweckmäßig wird zur Versorgung des Synthesegasgenerators mit Sauerstoffgas das mit Hilfe der Sauerstoffentziehungseinrichtung dem Verbrennungsabgas des Vorbrenners entzogene Sauerstoffgas verwendet. Des weiteren kann das vom Synthesegasgenerator erzeugte Synthesegas dem Vorbrenner und/oder dem Nachbrenner als Brennstoffgas zugeführt werden. Bei einer derartigen Vorgehensweise kann somit aus einem grundsätzlich beliebigen Wasserstoff enthaltenden Brennstoff, z.B. Erdöl, Erdgas, Kohle, ein Synthesegas mit hohem Brennwert erzeugt werden, das bei seiner Verbrennung vergleichsweise niedrige Schadstoffemissionen aufweist. Vorteilhaft ist hierbei, dass die Erfindung ein in sich geschlossenes System vorschlägt, bei dem der mit Hilfe der Sauerstoffentziehungseinrichtung bereitgestellte Sauerstoff im Synthesegasgenerator zur Herstellung des Synthesegases genutzt wird und bei dem das Synthesegas in den Brennern als Brennstoffgas genutzt wird. Der im Synthesegasgenerator zur Herstellung des Synthesegases genutzte Brennstoff wird dabei nicht vollständig verbrannt, sondern dient zur Gewinnung von Wasserstoff aus dem Wasserdampf. Hierzu findet im Synthesegasgenerator eine partielle Oxidation statt. Eine direkte Kontaktierung des genutzten Brennstoffs mit der Sauerstoffentziehungseinrichtung bleibt dabei aus, so dass diese nicht durch den Brennstoff verschmutzt werden kann. Besonders vorteilhaft ist dabei die Verwendung eines relativ schmutzigen, Wasserstoff und Kohlenstoff enthaltendenden Rohbrennstoffs, wie z. B. Kohle oder Ölsand oder Holz oder Haushaltsmüll, da auch aus diesen Rohbrennstoffen über das Synthesegas eine schadstoffarme Verbrennung in den Brennern realisierbar ist.

Bei einer Weiterbildung kann das vom Synthesegasgenerator erzeugte Synthesegas vor seiner Zuführung zu den Brennern in einer Reinigungseinrichtung diversen Reinigungsmaßnahmen unterzogen werden. Neben einer Abscheidung von Staub, Partikeln und Tröpfen kann es dabei auch vorgesehen sein, dem Synthesegas gegebenenfalls vorhandene unerwünschte Schadstoffgase zu entziehen. Beispielsweise kann dem Synthesegas auf bekannte Weise Schwefel und/oder Schwefelwasserstoff entzogen werden. Des weiteren ist es ebenfalls möglich, dem Synthesegas Kohlenstoff und Kohlenstoffoxide zu entziehen. Gerade durch die zuletzt genannte Maßnahme kann das Synthesegas so aufbereitet werden, dass es letztlich zur Durchführung der Verbrennungsreaktion hauptsächlich Wasserstoffgas enthält, das zusammen mit Sauerstoffgas, insbesondere in Luft, im wesentlichen schadstofffrei verbrennt. Bei dieser Vorgehensweise ergibt sich somit eine Kraftwerksanlage, bei der die Turbinenabgase im wesentliche keine Schadstoffe enthalten. Insbesondere sind in den Turbinenabgasen keine Kohlenstoffoxide enthalten.

Vorzugsweise weist die Sauerstoffentziehungseinrichtung wenigstens eine Sauerstoff-Transport-Membran auf, die eine Entziehungsseite (retentate side) und eine Anreicherungsseite (permeate side) aufweist. Im Betrieb wird das Verbrennungsabgas des Vorbrenners der Entziehungsseite zugeführt. Die Sauerstoff-Transport-Membran entzieht dann diesem Verbrennungsabgas Sauerstoffgas und stellt dieses durch die Membran hindurch an der Anreicherungsseite bereit. Bestimmte Ausführungsformen derartiger Membranen sind als MCM-Membran (Mixed Conducting Membrane) bekannt. Eine derartige Membran arbeitet auch bei im Vergleich zur Umgebungstemperatur hohen Temperaturen von z.B. 800°C bis 1.000°C zuverlässig.

Beispiele derartiger Membranen finden sich z.B. in der US 6,786,952 und in der US 6,503,296.

Vorzugsweise ist der Vorbrenner als Niedertemperaturbrenner ausgebildet, während der Nachbrenner als Hochtemperaturbrenner ausgebildet ist. Ein derartiger Niedertemperaturbrenner arbeitet bei Temperaturen, die kleiner sind als 1.200°C vorzugsweise in einem Temperaturbereich von etwa 750°C bis 1.000°C. Im Unterschied dazu arbeitet ein derartiger Hochtemperaturbrenner z.B. bei Temperaturen, die größer sind als 1.000°C, vorzugsweise in einem Temperaturbereich von etwa 1.200°C bis 1.450°C. Bei dieser Bauweise arbeitet die Sauerstoffenziehungseinrichtung bzw. deren Sauerstoff-Transport-Membran auf dem Temperaturniveau des Niedertemperaturbrenners, wodurch optimale Ergebnisse für die Sauerstoffentziehung erzielt werden können. Dabei ist gleichzeitig die Temperaturbelastung der Sauerstoffentziehungseinrichtung bzw. der Membran vergleichsweise gering, wodurch sich deren Haltbarkeit oder Standzeit vergrößert.

Weitere wichtige Merkmale und Vorteile der vorliegenden Erfindung ergeben sich aus den Unteransprüchen, aus den Zeichnungen und aus der zugehörigen Figurenbeschreibung anhand der Zeichnungen.

### Kurze Beschreibung der Zeichnungen

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen. Es zeigen, jeweils schematisch,
- Fig. 1: eine schaltplanartige Prinzipdarstellung einer Zentraleinheit einer Kraftwerksanlage gemäß der Erfindung,
- Fig. 2: eine Ansicht einer Ausführungsart der Erfindung,
- Fig. 3: eine Ansicht wie in Fig. 2, jedoch bei einer erweiterten Ausführungsform.

### Wege zur Ausführung der Erfindung

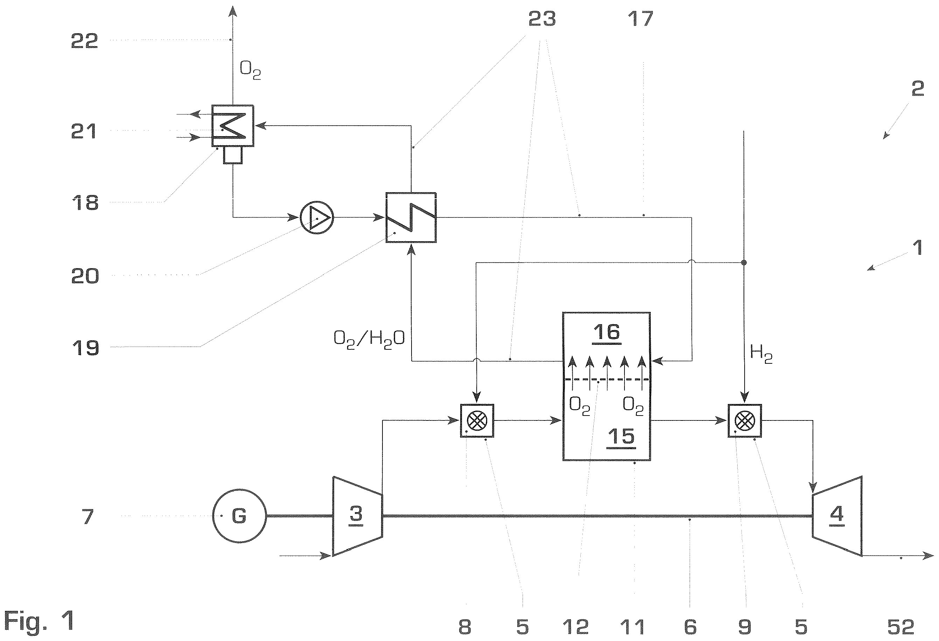

Fig. 1 zeigt eine Zentraleinheit 1 einer Kraftwerksanlage 2, die insbesondere zur Stromerzeugung dient und die in den Figuren 2 und 3 durch einen mit Strich-Punkt-Linie abgegrenzten Rahmen angedeutet ist. Die Zentraleinheit 1 der Kraftwerksanlage 2 umfasst zumindest einen Verdichter 3, wenigstens eine Turbine 4, die zweckmäßig als Gasturbine ausgestaltet ist, sowie eine Brenneranordnung 5. Die Turbine 4 treibt über einen Antriebsstrang 6 den Verdichter 3 und vorzugsweise einen Generator 7 an.

Die Brenneranordnung 5 umfasst einen Vorbrenner 8, der hier unmittelbar stromab des Verdichters 3 angeordnet ist, sowie einen Nachbrenner 9, der hier unmittelbar stromauf der Turbine 4 angeordnet ist. Die beiden Brenner 8, 9 werden über ein Brennstoffversorgungssystem 10 mit einem gasförmigen Brennstoff versorgt.

Zwischen den beiden Brennern 8, 9 weist die Zentraleinheit 1 eine Sauerstoffentziehungseinrichtung 11 auf, die so gestaltet ist, dass sie einem zugeführten Gas darin enthaltenden Sauerstoff entzieht und diesen an einer anderen Stelle der Sauerstoffentziehungseinrichtung 11 bereitstellt. Bei der hier gezeigten, bevorzugten Ausführungsform, weist die Sauerstoffentziehungseinrichtung 11 zumindest eine Sauerstoff-Transport-Membran 12 auf, die hier durch eine punktierte Linie angedeutet ist. Eine derartige Membran 12 kann vorzugsweise als MCM-Membran ausgestaltet sein. Die Membran 12 weist eine Entziehungsseite 13 und eine Anreicherungsseite 14 auf und trennt innerhalb der Sauerstoffentziehungseinrichtung 11 einen Entziehungsraum 15 von einem Anreicherungsraum 16. Im Betrieb der Sauerstoffentziehungseinrichtung 11 entzieht die Membran 12 einem Gas, das sich im Entziehungsraum 15 aufhält und Sauerstoffgas enthält, einen Teil des Sauerstoffgases und transportiert dieses durch die Membran 12 auf die Anreicherungsseite 14. Dort kann das Sauerstoffgas mit Hilfe eines Spülgases aufgenommen und aus dem Anreicherungsraum 16 abgeführt werden. Der Entziehungsvorgang ist in Fig. 1 durch Pfeile symbolisiert, welche die Membran 12 in der Förderrichtung durchsetzen. Der Transport des Sauerstoffgases durch die Membran 12 hindurch, findet üblicherweise bei einer vergleichsweise großen Druckdifferenz zwischen Entziehungsseite 13 und Anreicherungsseite 14 statt. Beispielsweise bewegt sich der Druck im Entziehungsraum in einem Bereich von etwa 15 bis 30 bar, während sich der Druck im Anreicherungsraum 16 etwa in einem Bereich von 1 bis 5 bar bewegt. Treibende Kraft für den Sauerstofftransport durch die Membran 12 ist die Partialdruckdifferenz an der Membran 12.

Um das Sauerstoffgas von der Anreicherungsseite 14 mit Hilfe eines geeigneten Spülgases abtransportieren können, weist die Zentraleinheit 1 eine Spülgaseinrichtung 17 auf. Die Spülgaseinrichtung 17 umfasst eine Sauerstoff-Spülgas-Trenneinrichtung 18, die zweckmäßig als Kondensator ausgestaltet ist, einen Wärmeübertrager 19, der zweckmäßig als Verdampfer ausgestaltet ist, sowie eine Pumpe 20. Als Spülmedium wird dabei eine Flüssigkeit, vorzugsweise Wasser, verwendet, die zur Erzeugung des Spülgases verdampft wird. Das Spülgas bzw. der Flüssigkeitsdampf, insbesondere Wasserdampf, tritt im Betrieb der Kraftwerksanlage 2 in den Anreicherungsraum 16 ein, nimmt das dort bereitgestellte Sauerstoffgas auf und transportiert dieses über den Wärmeübertrager 19 zur Sauerstoff-Spülgas-Trenneinrichtung 18. In der Sauerstoff-Spülgas-Trenneinrichtung 18 wird das bereits im Wärmeübertrager 19 vorgekühlte Spülgas-Sauerstoffgas-Gemisch nochmals herabgekühlt, wozu in Fig. 1 ein entsprechender Kühlkreis 21 angedeutet ist. Durch diese weitere Abkühlung kann der Flüssigkeitsdampf auskondensieren, so dass der gasförmige Sauerstoff übrig bleibt und über eine Sauerstoffleitung 22 abgeführt werden kann. Im Unterschied dazu wird das verflüssigte Spülmedium der Pumpe 20 zugeführt und durch den Wärmeübertrager 19 gepumpt. Durch die hohe Temperatur des die Sauerstoffentziehungseinrichtung 11 verlassenden Spülgas-Sauerstoffgas-Gemischs kann die Flüssigkeit im Wärmeübertrager 19 verdampft werden, wodurch wieder das Spülgas als Flüssigkeitsdampf bereitsteht. Für das Spülmedium wird somit ein in sich geschlossener Kreis bereitgestellt. Auf diese Weise ist der Wärmeübertrager 19 in einem Spülgaspfad 23 zwischen der Sauerstoffentziehungseinrichtung 11 und der Sauerstoff-Spülgas-Trenneinrichtung 18 angeordnet. Gleichzeitig wird durch den Wärmeübertrager 19 die auskondensierte Flüssigkeit in den Spülgaspfad 23 zurückgeführt und dabei gleichzeitig verdampft.

Zweckmäßig ist der Vorbrenner 8 als Niedertemperaturbrenner ausgestaltet, dessen Betriebstemperatur unterhalb 1.200°C liegt und zwar zweckmäßig in einem Bereich von etwa 750°C bis etwa 1.000°C. Auf diese Weise sind die Verbrennungsabgase des Vorbrenners 8 nicht zu heiß für die Membran 12, so dass diese zum einen optimal arbeiten kann und zum anderen eine vergleichsweise hohe Lebensdauer besitzt. Zweckmäßig ist der Nachbrenner 9 als Hochtemperaturbrenner ausgestaltet, dessen Betriebstemperatur größer als 1.000°C ist und vorzugsweise in einem Bereich von etwa 1.200°C bis etwa 1.450°C liegt. Durch den Nachbrenner 9 wird somit ein Verbrennungsabgas generiert, das eine relativ große Energie enthält, die in der Turbine 4 durch Entspannen dieses Abgases in Arbeit zum Antreiben des Verdichters 3 und des Generators 7 umgesetzt werden kann.

Zweckmäßig ist dabei der Niedertemperaturbrenner, also der Vorbrenner 8 als katalytischer Brenner ausgestaltet bzw. als Brenner, der mit katalytischer Verbrennung arbeitet. Bei einem derartigen katalytischen Brenner kann bei den genannten niedrigen Temperaturen eine vergleichsweise stabile Verbrennungsreaktion erzeugt werden. Im Unterschied dazu arbeitet der Hochtemperaturbrenner bzw. der Nachbrenner 9 mit einer homogenen Verbrennung.

Entsprechend den Fig. 2 und 3 enthält die Kraftwerksanlage 2 wieder die Zentraleinheit 1. Die Kraftwerkseinrichtung 2 ist außerdem mit einem Synthesegasgenerator 24 ausgestattet, an den die von der Sauerstoff-Spülgas-Trenneinrichtung 18 kommende Sauerstoffleitung 22 angeschlossen ist. Des weiteren ist an den Synthesegasgenerator 24 eine Brennstoffversorgungseinrichtung 25 angeschlossen, die den Synthesegasgenerator 24 mit einem Brennstoff versorgt. Vorzugsweise handelt es sich bei diesem Brennstoff um einen Wasserstoff und Kohlenstoff, jeweils atomar, enthaltenden Rohbrennstoff. Derartige Brennstoffe sind beispielsweise Erdöl, Erdgas, Kohle, Ölsand, Ölschlamm, Holz, Industriemüll und Haushaltsmüll. Des weiteren ist an den Synthesegasgenerator 24 eine Dampfversorgung 26 angeschlossen, die unter Hochdruck stehenden Wasserdampf dem Synthesegasgenerator 24 zuführt und nicht benötigten Dampf wieder abführt. Der Wasserdampf ist der Lieferant des Wasserstoffs für die Synthesegasproduktion. Des Weiteren kann dem Synthesegasgenerator gemäß einem Pfeil 27 Wasser zur Kühlung des Reaktors 24 zugeführt werden.

Der Synthesegasgenerator 24 ist so ausgestaltet, dass er aus dem Wasserdampf dem Brennstoff und aus dem Sauerstoffgas ein Synthesegas erzeugen kann, das Wasserstoffgas enthält. Gleichzeitig können dabei Oxidationsprodukte anfallen, die entweder mit dem Synthesegas den Synthesegasgenerator 24 verlassen oder als Schlacke in diesem zurückbleiben. Die Schlacke kann gemäß einem Pfeil 28 aus dem Synthesegenerator 24 abgeführt werden.

Das vom Synthesegasgenerator 24 erzeugte Synthesegas wird über einen Synthesegaspfad 29 den Brennern 8, 9 zugeführt, wo es aufgrund seines Gehalts an Wasserstoffgas als Brennstoffgas genutzt werden kann. Wichtig ist hierbei, dass das gesamte von der Zentraleinheit 1 generierte Sauerstoffgas im Synthesegasgenerator 24 zur Erzeugung von Synthesegas genutzt wird und dass außerdem das gesamte Synthesegas in der Brenneranordnung 5 zur Durchführung der Verbrennungsreaktionen als Brennstoffgas genutzt wird. Auf diese Weise kann ein nach außen geschlossenes System bereit gestellt werden. Grundsätzlich ist es jedoch auch möglich, das Synthesegas zu entnehmen, zum Beispiel bei einer Überproduktion.

Gemäß einer besonders vorteilhaften Ausführungsform weist der Synthesegasgenerator 24 eine Vergasungseinrichtung 30 auf. Eine derartige Vergasungseinrichtung kann aus einem Rohbrennstoff, der atomaren Kohlenstoff enthält, in Verbindung mit Sauerstoffgas und Wasserdampf das erwünschte Wasserstoffgas enthaltende Synthesegas erzeugen. Bei der in der Vergasungseinrichtung 30 ablaufenden Vergasungsreaktion werden, zum Beispiel Kohlenwasserstoffe (Brennstoff; CxHy) mit Sauerstoff (O₂) und Wasserdampf (H₂O) in Kohlenmonoxid (CO), Wasserstoff (H₂) und Restdampf (H₂O) umgesetzt.

Dabei ist es zweckmäßig, das Synthesegas vor seinem Eintritt in die Brenner 8, 9 zu behandeln, insbesondere zu reinigen. Zum einen ist hierzu eine Synthesegasreinigungseinrichtung 31 vorgesehen, die durch eine geschweifte Klammer symbolisiert ist und die im Synthesegaspfad 29 angeordnet ist. Zum anderen kann im Synthesegaspfad 29 außerdem ein Synthesegaskühler 32 angeordnet sein, und zwar vorzugsweise stromauf der Synthesegasreinigungseinrichtung 31.

Der Synthesegaskühler 32 enthält einen Kühlpfad 33, in den eingangsseitig eine Flüssigkeit, insbesondere Wasser, eintritt, was wiederum mit 27 bezeichnet wird. Ausgangsseitig tritt aus dem Kühlpfad 33 ein Dampf aus, der zweckmäßig unter Hochdruck steht. Dementsprechend ist dieser Hochdruckdampf hier wieder mit 26 bezeichnet. Durch die Abkühlung des Synthesegases kann zum einen die nachfolgende Reinigung vereinfacht werden. Zum andern kann die dabei dem Synthesegas entnommene Prozesswärme für andere Zwecke verwendet werden. Im vorliegenden Fall wird mit dieser Prozesswärme der Hochdruckdampf 26 erzeugt, der zum Beispiel dem Synthesegasgenerator 24 zugeführt werden kann, um dort die Synthesereaktion zu unterstützen.

Die Synthesegasreinigungseinrichtung 31 umfasst hier exemplarisch eine Staubentfernungseinrichtung 34, die mit Trägheitskräften arbeitet, zum Beispiel mit einer labyrinthartigen Strömungsumlenkung, um auf diese Weise tröpfchenförmige und/oder partikelförmige Verunreinigungen aus dem Synthesegas zu entfernen. Beispielsweise handelt es sich hierbei um mitgeführte Asche. Die abgeschiedenen Rückstände können gemäß einem Pfeil 35 aus der Staubentfernungseinrichtung 34 entnommen werden.

Des weiteren kann die Synthesegasreinigungseinrichtung 31 eine Gaswascheinrichtung 36 aufweisen, die mit Hilfe einer Waschflüssigkeit ebenfalls tröpfchenförmige und/oder partikelförmige Verunreinigungen aus dem Synthesegas auswaschen kann. Die durch die Verunreinigungen kontaminierte Waschflüssigkeit, insbesondere Wasser, kann entsprechend einem Pfeil 37 aus der Gaswascheinrichtung 36 entfernt werden.

Die Synthesegasreinigungseinrichtung 31 kann außerdem eine Entschwefelungseinrichtung 38 aufweisen, die es ermöglicht, dem Synthesegas Schwefel und schwefelhaltige Verbindungen, wie zum Beispiel Schwefelwasserstoff, zu entziehen. Die Ausscheidung von Schwefel bzw. Schwefelverbindungen ist hier durch einen Pfeil 39 angedeutet.

Das auf diese Weise gereinigte Synthesegas kann gemäß Fig. 2 in den Brennern 8, 9 vergleichsweise emissionsarm verbrannt werden. Außerdem dient die Entschwefelung dem Schutz der Membran 12, die - je nach Bauweise - schwefelempfindlich sein kann.

Entsprechend Fig. 3 kann die Abgasreinigungseinrichtung 31 zusätzlich oder alternativ mit einer Entkarbonisierungseinrichtung 40 ausgestattet sein, die hier ebenfalls durch eine geschweifte Klammer charakterisiert ist. Mit Hilfe einer derartigen Entkarbonisierungseinrichtung 40 können dem Synthesegas Kohlenstoff und Kohlenstoffverbindungen, vorzugsweise Kohlenstoffoxide entzogen werden. Vorzugsweise umfasst eine derartige Entkarbonisierungseinrichtung 40 einen Reaktor 41, der im Synthesegas mitgeführtes Kohlenmonoxid zu Kohlendioxid aufoxidiert. Hierzu benötigt der Reaktor 41 beispielsweise einen Flüssigkeitsdampf, der unter einem mittleren Druck steht. Die Zuführung dieses Mitteldruckdampfs ist in Fig. 3 durch einen Pfeil 42 symbolisiert. Im Reaktor 41 läuft eine Redox-Reaktion oder shift-reaction ab, bei der Wasserdampf (H₂O) und Kohlenmonoxid (CO) zu Wasserstoff (H₂) und Kohlendioxid (C0₂) umgesetzt werden. Das bedeutet, dass im Reaktor 41 eine Anreicherung des Synthesegases mit Wasserstoff stattfindet.

Des weiteren kann die Entkarbonisierungseinrichtung 40 eine Kohlendioxidentfernungseinrichtung 43 aufweisen, die dem Synthesegas das Kohlendioxid entzieht. Das abgeschiedene Kohlendioxid kann entsprechend einem Pfeil 44 einer Verflüssigungseinrichtung 45 der Entkarbonisierungseinrichtung 40 zugeführt werden. In einem Kompressor 46, der durch einen Motor 47 angetrieben ist, wird dabei das Kohlendioxidgas komprimiert und im komprimierten Zustand in einem Kondensator 48 zumindest bis auf seinen Taupunkt abgekühlt. Ein entsprechender Kühlkreis ist mit 49 bezeichnet. Das verflüssigte Kohlendioxid kann dann entsprechend einem Pfeil 50 abgeführt werden. Das verflüssigte Kohlendioxid kann raumsparend gelagert und transportiert werden. Grundsätzlich kann in der Kohlendioxidentfernungseinrichtung 43 das Kohlendioxid auf beliebige Weise aus dem Synthesegas entzogen werden; beispielsweise durch eine entsprechende Abkühlung, bei der sich das Kohlendioxid verflüssigt und das Wasserstoffgas gasförmig bleibt. Alternativ dazu kann das Kohledioxid auch mit einem selektiv lösenden flüssigen Lösungsmittel, wie zum Beispiel Selexol, physikalisch adsorbiert werden. Ebenso ist die Verwendung einer für Kohlendioxid selektiv durchlässigen Membran denkbar.

Die auf diese Weise separat aus dem Synthesegas entfernten Verunreinigungen liegen anschließend getrennt vor und können dementsprechend umweltgerecht entsorgt bzw. recycelt werden.

Das mit Hilfe der Synthesegasreinigungseinrichtung 31 gereinigte Synthesegas besteht bei der in Fig. 3 gezeigten Ausführungsform im wesentlichen nur noch aus gasförmigem Wasserstoff, der den Brennern 8, 9 als Brennstoffgas zur Verfügung steht. Die in den Brennern 8, 9 dann ablaufenden Verbrennungsreaktionen sind im wesentlichen schadstofffrei. Zumindest können die Kohlenstoffoxide auf diese Weise nicht in die Abgase der Turbine 4 gelangen.

Den Ausführungsformen der Fig. 2 und 3 ist gemeinsam, dass die eigentliche Verbrennungsreaktion in den Brennern 8, 9 mit einem definierten, hinreichend sauberen Synthesegas durchgeführt werden kann, während ein grundsätzlich beliebig verunreinigter Rohbrennstoff im Synthesegasgenerator 24 umgesetzt wird. Dieser Zusammenhang ist besonders wichtig, da einerseits die Lebensdauer und ordnungsgemäße Funktion der Sauerstoffentziehungseinrichtung 11 von der Zusammensetzung der Verbrennungsabgase des Vorbrenners 8 abhängt. Zum anderen führt ein sauberer Brennstoff, der im Vergleich zum Wasserstoffgehalt vergleichsweise wenig Kohlenstoff enthält oder kohlenstofffrei ist, zu erheblich besseren CO₂-Emissionswerten.

Den Ausführungsformen der Fig. 2 und 3 ist außerdem gemeinsam, dass der Turbine 4 jeweils eine Dampferzeugungseinrichtung 51 nachgeordnet ist. Die Dampferzeugungseinrichtung 51 ist dabei in einem Abgaspfad 52 der Turbine 4 angeordnet und dient dazu, mit Hilfe des zugeführten Turbinenabgases eine Flüssigkeit, vorzugsweise Wasser, zu verdampfen. Hierbei wird die im Turbinenabgas enthaltene Restwärme ausgenutzt, wodurch gleichzeitig das Turbinenabgas abgekühlt wird. Mit dem so gewonnenen Dampf kann eine Dampfturbine 53 gespeist werden, die dabei einen Generator 54 antreibt, bei dem es sich grundsätzlich auch um den von der Turbine 4 angetriebenen Generator 7 handeln kann.

Bei der hier gezeigten Ausführungsform enthält die Dampferzeugungseinrichtung 51 drei Wärmeübertrager, nämlich einen Flüssigkeitswärmeübertrager 55, einen Verdampfer 56 und einen Dampfwärmeübertrager 57. Eine erste Pumpe 58 fördert die entsprechend aufbereitete Flüssigkeit, insbesondere Wasser, aus einem Reservoir 59 in einen Druckbehälter 60. Vom Druckbehälter 60 fördert eine zweite Pumpe 61 die Flüssigkeit durch den Flüssigkeitswärmeübertrager 55. Dabei wird die Flüssigkeit erwärmt. Zwischen der zweiten Pumpe 61 und dem Flüssigkeitswärmeübertrager 55 kann Flüssigkeit für andere Zwecke abgezweigt werden, beispielsweise zur Kühlung des Synthesegasgenerators 24 und/oder zur Kühlung des Synthesegases im Synthesegaskühler 32. Dementsprechend ist diese Flüssigkeitsabzweigung ebenfalls mit 27 bezeichnet.

Nach dem Flüssigkeitswärmeübertrager 55 wird in einem externen weiteren Wärmeübertrager 62 die vorgewärmte Flüssigkeit mit heißem Dampf, der vom Verdampfer 56 kommt, weiter aufgeheizt. Anschließend gelangt die Flüssigkeit in den Verdampfer 56, worin sie verdampft wird. Der hierbei erzeugte heiße Dampf durchströmt den externen Wärmeübertrager 62 und gibt dabei einen Teil seiner Wärme an die vorgewärmte Flüssigkeit ab, die anschließend dem Verdampfer 56 zugeführt wird. Stromab des Wärmeübertragers 62 gelangt der Dampf in den Dampfwärmeübertrager 57, worin der Dampf zusätzlich erhitzt wird. Stromab des Dampfwärmeübertragers 57 liegt dann ein unter Hochdruck stehender heißer Dampf vor. Dieser Hochdruckdampf kann bei Bedarf abgezweigt werden, um beispielsweise den Synthesevorgang im Synthesegasreaktor 24 zu unterstützen. Dementsprechend ist die Abzweigung des Hochdruckdampfs hier ebenfalls mit 26 bezeichnet. Des weiteren ist es grundsätzlich möglich, den Hochdruckdampf 26 als inertes Gas dem Synthesegas beizumischen, was in den Fig. 2 und 3 stromab der Synthesegasreinigungseinrichtung 31 erfolgt und ebenfalls durch einen Pfeil angedeutet ist. Der an anderen Stellen der Kraftwerksanlage 2 erzeugte, zum Beispiel im Synthesegaskühler 32, oder nicht mehr benötigte, zum Beispiel beim Synthesegasgenerator 24, Hochdruckdampf 26 kann in den Dampfkreis der Dampferzeugungseinrichtung 51 an einer geeigneten Stelle zurückgeführt werden, beispielsweise zwischen dem Dampfwärmeübertrager 57 und dem Wärmeübertrager 62. Diese Rückführung des Hochdruckdampfes ist dabei wieder durch einen Pfeil 26 angedeutet.

Der in der Dampfturbine 53 entspannte Dampf kann in einem Kondensator 63 mit Hilfe eines entsprechenden Kühlkreises 64 verflüssigt werden. Die Flüssigkeit steht dann saugseitig der ersten Pumpe 58 wieder zur Verfügung. Des weiteren ist es gemäß Fig. 3 möglich, an der Dampfturbine 53 an einer geeigneten Stelle Dampf mit einem mittleren Druck, also einen Mitteldruckdampf zu entnehmen, was durch einen Pfeil angedeutet ist, der wiederum mit 42 bezeichnet ist. Dieser Mitteldruckdampf 42 kann beim Reaktor 41 zum Aufoxidieren des Kohlenmonoxids genutzt werden. Ebenso ist es möglich, anstelle des Hochdruckdampfs 36 diesen Mitteldruckdampf 42 dem Synthesegas zuzumischen.

### Die erfindungsgemäße Kraftwerksanlage 2 arbeitet wie folgt:

Der Verdichter 3 komprimiert ein Oxidatorgas, insbesondere Luft, das Sauerstoffgas enthält. Das komprimierte Oxidatorgas wird im Vorbrenner 8 mager, also mit Sauerstoffüberschuss verbrannt. Das Verbrennungsabgas des Vorbrenners 8 wird dem Entziehungsraum 15 der Sauerstoffentziehungseinrichtung 11 zugeführt. In der Sauerstoffentziehungseinrichtung 11 wird ein Teil des im Verbrennungsabgas des Vorbrenners 8 enthaltenen gasförmigen Restsauerstoffs durch die Membran 12 in den Anreicherungsraum 16 transportiert. Das hinsichtlich seines Sauerstoffgehalts herabgesetzte Verbrennungsabgas des Vorbrenners 8 wird anschließend dem Nachbrenner 9 zugeführt, in dem eine weitere, vorzugsweise magere, Verbrennung stattfindet.

Im Anreichungsraum 16 wird das Sauerstoffgas vom Spülgas aufgenommen, wobei sich das Spülgas gleichzeitig erhitzt. Im Wärmeübertrager 19 wird das Spülgas-Sauerstoff-Gemisch wieder abgekühlt. In der Sauerstoff-Kühlgas-Trenneinrichtung 18 wird das Spülgas, zweckmäßig Wasserdampf, kondensiert und über die Pumpe 20 durch den Wärmeübertrager 19 in den Spülgaspfad 23 zurückgefördert und dabei gleichzeitig verdampft. Das hierbei übrig bleibende Sauerstoffgas wird über die Sauerstoffleitung 22 dem Synthesegasreaktor 24 zugeführt.

Im Synthesegasreaktor 24 wird ein Rohbrennstoff, zum Beispiel Kohle, so umgesetzt, dass dabei ein Wasserstoffgas enthaltendes Synthesegas entsteht. Das Synthesegas wird im Synthesegaskühler 32 abgekühlt und in der Synthesegasreinigungseinrichtung 31 von Verunreinigungen befreit.

Das gereinigte Synthesegas wird dann den Brennern 8, 9 als Brennstoffgas zugeführt, wobei es durch den darin enthaltenden Wasserstoff zu vergleichsweise sauberen Verbrennungsreaktionen führt.

Da der Vorbrenner 8 zweckmäßig ein Niedertemperaturbrenner ist, besitzen dessen Verbrennungsabgase entsprechend vergleichsweise niedrigere Temperaturen. Gleichzeitig herrscht in diesem Verbrennungsabgas ein relativ hoher Druck, nämlich in der Regel der Verdichterausgangsdruck, der im Bereich zwischen 15 bar und 30 bar liegen kann. Im Unterschied dazu herrscht im Spülgaspfad ein vergleichsweise niedriger Druck, der zweckmäßig in einem Bereich von 1 bar bis 5 bar liegen kann. Der Sauerstofftransport durch die Membran 12 ist dabei durch die herrschende Druckdifferenz und außerdem durch eine entsprechende Konzentrationsdifferenz angetrieben. Die Konzentrationsdifferenz kann dadurch aufrecht erhalten werden, dass das sich an der Anreicherungsseite 14 anreichernde Sauerstoffgas mit Hilfe des Spülgases permanent entfernt wird.

Zweckmäßig ist der Nachbrenner 9 ein Hochtemperaturbrenner, so dass seine Verbrennungsabgase entsprechend heiß sind. In der Turbine 4 werden die heißen Verbrennungsabgase des Nachbrenners 9 entspannt und bei der Durchströmung der Dampferzeugungseinrichtung 51 abgekühlt. Dabei wird Flüssigkeit verdampft, die anschließend in der Dampfturbine 53 entspannt werden kann.

### Bezugszeichenliste

- 1: Zentraleinheit
- 2: Kraftwerksanlage
- 3: Verdichter
- 4: Turbine
- 5: Brenneranordnung
- 6: Antriebsstrang
- 7: Generator
- 8: Vorbrenner
- 9: Nachbrenner
- 10: Brennstoffversorgung
- 11: Sauerstoffentziehungseinrichtung
- 12: Sauerstoff-Transport-Membran
- 13: Entziehungsseite von 12
- 14: Anreicherungsseite von 12
- 15: Entziehungsraum
- 16: Anreicherungsraum
- 17: Spülgaseinrichtung
- 18: Sauerstoff-Spülgas-Trenneinrichtung
- 19: Wärmeübertrager
- 20: Pumpe
- 21: Kühlkreis
- 22: Sauerstoffleitung
- 23: Spülgaspfad
- 24: Synthesegasgenerator
- 25: Brennstoffversorgung
- 26: Hochdruckdampf
- 27: Flüssigkeit
- 28: Schlackeentfernung
- 29: Synthesegaspfad
- 30: Vergasungseinrichtung
- 31: Spülgasreinigungseinrichtung
- 32: Spülgaskühler
- 33: Kühlpfad
- 34: Staubentfernungseinrichtung
- 35: Staubabführung
- 36: Gaswascheinrichtung
- 37: Schmutzwasserentfernung
- 38: Entschwefelungseinrichtung
- 39: Schwefelentfernung
- 40: Entkarbonisierungseinrichtung
- 41: Reaktor
- 42: Mitteldruckdampf
- 43: Kohlendioxidentfernungseinrichtung
- 44: Kohlendioxidleitung
- 45: Kohlendioxidverflüssigungseinrichtung
- 46: Kompressor
- 47: Motor
- 48: Kondensator
- 49: Kühlkreis
- 50: Kohlendioxidentfernung
- 51: Dampferzeugungseinrichtung
- 52: Abgaspfad von 4
- 53: Dampfturbine
- 54: Generator
- 55: Flüssigkeitswärmeübertrager
- 56: Verdampfer
- 57: Dampfwärmeübertrager
- 58: erste Pumpe
- 59: Reservoir
- 60: Druckbehälter
- 61: zweite Pumpe
- 62: externer Wärmeübertrager
- 63: Kondensator
- 64: Kühlkreis

## Patentansprüche

1. Verfahren zum Betreiben einer Kraftwerksanlage (2), die wenigstens einen Verdichter (3), wenigstens eine Turbine (4) und wenigstens eine Brenneranordnung (5) aufweist,
- bei dem im Verdichter (3) ein Sauerstoffgas enthaltendes Oxidatorgas komprimiert wird,
- bei dem das komprimierte Oxidatorgas in wenigstens einem Vorbrenner (8) der Brenneranordnung (5) mit einem Brennstoffgas mager verbrannt wird,
- bei dem ein Verbrennungsabgas des Vorbrenners (8) einer Sauerstoffentziehungseinrichtung (11) zugeführt wird, die dem Verbrennungsabgas einen Teil des darin enthaltenen Sauerstoffgases entzieht,
- bei dem das hinsichtlich seines Sauerstoffanteils reduzierte Verbrennungsabgas stromab der Sauerstoffentziehungseinrichtung (11) in wenigstens einem Nachbrenner (9) der Brenneranordnung (5) mit einem Brennstoffgas verbrannt wird,
- bei dem ein Verbrennungsabgas des Nachbrenners (9) der Turbine (4) zugeführt und darin entspannt wird,
- bei dem der dem Verbrennungsabgas des Vorbrenners (8) entzogene Sauerstoff mittels eines Spülgases aus der Sauerstoffentziehungseinrichtung (11) abgeführt wird,
- wobei ein Synthesegasgenerator (24) vorgesehen ist, der aus einem Brennstoff, aus Wasserdampf und aus Sauerstoffgas ein Wasserstoffgas enthaltendes Synthesegas erzeugt,
- wobei zur Versorgung des Synthesegasgenerators (24) mit Sauerstoffgas das mit Hilfe der Sauerstoffentziehungseinrichtung (11) dem Verbrennungsabgas des Vorbrenners (8) entzogene Sauerstoffgas verwendet wird,
- wobei das vom Synthesegasgenerator (24) erzeugte Synthesegas dem Vorbrenner (8) und/oder dem Nachbrenner (9) als Brennstoffgas zugeführt wird,
- wobei eine Dampferzeugungseinrichtung (51) vorgesehen ist, die in einen Abgaspfad (52) der Turbine (4) eingebunden ist und die mit Hilfe eines Turbinenabgases eine Flüssigkeit, insbesondere Wasser, verdampft, wobei gleichzeitig das Turbinenabgas abgekühlt wird,
**dadurch gekennzeichnet,**
- **dass** als Spülgas ein inertes oder zumindest brennstofffreies Gas verwendet wird,
- **dass** die Dampferzeugungseinrichtung (51) den Dampf mit einem Hochdruck beaufschlagt,
- **dass** der Hochdruckdampf in einer Dampfturbine (53) entspannt wird, und
- **dass** der Dampfturbine (53) ein teilweise entspannter Dampf als Mitteldruckdampf entnommen und dem Synthesegas stromauf des Vorbrenners (8) und/oder des Nachbrenners (9) zugemischt wird.

2. Verfahren nach Anspruch 1,
**dadurch gekennzeichnet,**
**dass** der Synthesegasgenerator (24) eine Vergasungseinrichtung (30) aufweist, die aus einem Kohlenstoff enthaltenden Rohbrennstoff, aus Wasserdampf und aus Sauerstoffgas das Wasserstoffgas enthaltende Synthesegas erzeugt.

3. Verfahren nach Anspruch 1 oder 2,
**dadurch gekennzeichnet,**
**dass** in einem Synthesegaspfad (29), der vom Synthesegasgenerator (24) zum Vorbrenner (8) und/oder zum Nachbrenner (9) führt, ein Synthesegaskühler (32) und/oder eine Synthesegasreinigungseinrichtung (31) angeordnet ist.

4. Verfahren nach Anspruch 3,
**dadurch gekennzeichnet,**
**dass** der Synthesegaskühler (32) zum Verdampfen einer Flüssigkeit verwendet wird.

5. Verfahren nach Anspruch 3 oder 4,
**dadurch gekennzeichnet,**
- **dass** die Synthesegasreinigungseinrichtung (31) eine Staubentfernungseinrichtung (34) aufweist, die tröpfchenförmige und/oder partikelförmige Verunreinigungen aus dem Synthesegas mittels Trägheitskräften entfernt, und/oder
- **dass** die Synthesegasreinigungseinrichtung (31) eine Gaswascheinrichtung (36) aufweist, die tröpfchenförmige und/oder partikelförmige Verunreinigen aus dem Synthesegas mittels einer Waschflüssigkeit auswäscht, und/oder
- **dass** die Synthesegasreinigungseinrichtung (31) eine Entschwefelungseinrichtung (38) aufweist, die dem Synthesegas Schwefel und/oder Schwefelverbindungen, zum Beispiel Schwefelwasserstoff, entzieht, und/oder
- **dass** die Synthesegasreinigungseinrichtung (31) eine Entkarbonisierungseinrichtung (40) aufweist, die dem Synthesegas Kohlenstoff und/oder Kohlenstoffverbindungen, zum Beispiel Kohlenmonoxid und/oder Kohlendioxid, entzieht.

6. Verfahren nach Anspruch 5,
**dadurch gekennzeichnet,**
- **dass** die Entkarbonisierungseinrichtung (40) einen Reaktor (41) aufweist, der im Synthesegas Kohlenmonoxid in Kohlendioxid aufoxidiert, und/oder
- **dass** die Entkarbonisierungseinrichtung (40) eine Kohlendioxidentfernungseinrichtung (43) aufweist, die dem Synthesegas Kohlendioxid entzieht.

7. Verfahren nach Anspruch 1,
**dadurch gekennzeichnet,**
- **dass** die Sauerstoffentziehungseinrichtung (11) wenigstens eine Sauerstoff-Transport-Membran (12) aufweist, die eine Entziehungsseite (13) und eine Anreicherungsseite (14) aufweist,
- **dass** das Verbrennungsabgas des Vorbrenners (8) der Entziehungsseite (13) zugeführt wird,
- **dass** die Membran (12) dem Verbrennungsabgas Sauerstoffgas entzieht und dieses durch die Membran (12) hindurch an der Anreicherungsseite (14) bereitstellt.

8. Verfahren nach Anspruch 7,
**dadurch gekennzeichnet,**
- **dass** eine Spülgaseinrichtung (17) vorgesehen ist, die an die Sauerstoffentziehungseinrichtung (11) angeschlossen ist und dieser das Spülgas zuführt,
- **dass** das Spülgas das an der Anreicherungsseite (14) der Membran (12) bereitgestellte Sauerstoffgas aufnimmt und abtransportiert.

9. Verfahren nach Anspruch 8,
**dadurch gekennzeichnet,**
- **dass** eine Sauerstoff-Spülgas-Trenneinrichtung (18) vorgesehen ist, die stromab der Sauerstoffentziehungseinrichtung (11) in einen Spülgaspfad (23) der Spülgaseinrichtung (17) eingebunden ist,
- **dass** die Sauerstoff-Spülgas-Trenneinrichtung (18) dem zugeführten Spülgas das mitgeführte Sauerstoffgas entzieht.

10. Verfahren nach Anspruch 9,
**dadurch gekennzeichnet,**
- **dass** als Spülgas ein Flüssigkeitsdampf verwendet wird,
- **dass** in der Sauerstoff-Spülgas-Trenneinrichtung (18) die Flüssigkeit auskondensiert und so vom Sauerstoff getrennt wird.

11. Verfahren nach Anspruch 10,
**dadurch gekennzeichnet,**
**dass** ein Wärmeübertrager (5) vorgesehen ist, der einerseits im Spülgaspfad (23) zwischen der Sauerstoffentziehungseinrichtung (11) und der Sauerstoff-Spülgas-Trenneinrichtung (18) angeordnet ist und durch den andererseits die auskondensierte Flüssigkeit verdampft und in den Spülgaspfad (23) zurückgeführt wird.

12. Verfahren nach einem der Ansprüche 1 bis 11,
**dadurch gekennzeichnet,**
**dass** der Vorbrenner (8) als Niedertemperaturbrenner ausgebildet ist, während der Nachbrenner (9) als Hochtemperaturbrenner ausgebildet ist.

13. Verfahren nach Anspruch 12,
**dadurch gekennzeichnet,**
- **dass** der Vorbrenner (8) in einem Temperaturbereich von 750° C bis 1.000° C arbeitet, und/oder
- **dass** der Vorbrenner (8) in einem Druckbereich von 15 bar bis 30 bar arbeitet, und/oder
- **dass** der Nachbrenner (9) in einem Temperaturbereich von 1.200° C bis 1.450° C arbeitet, und/oder
- **dass** der Nachbrenner (9) in einem Druckbereich von 1 bar bis 5 bar arbeitet.

14. Verfahren nach Anspruch 12 oder 13,
**dadurch gekennzeichnet,**
**dass** der Niedertemperaturbrenner (8) als katalytischer Brenner ausgebildet ist und/oder mit einer katalytischen Verbrennung arbeitet.

15. Kraftwerksanlage, insbesondere zur Stromerzeugung,
- mit einem Verdichter (3) zum Komprimieren eines Sauerstoffgas enthaltenden Oxidatorgases,
- mit wenigstens einem Vorbrenner (8) einer Brenneranordnung (5) zum mageren Verbrennen des komprimierten Oxidatorgases mit einem Brennstoffgas,
- mit einer Sauerstoffentziehungseinrichtung (11) zum Entziehen eines Teils des Sauerstoffgases aus dem Verbrennungsabgas des Vorbrenners (8),
- mit wenigstens einem Nachbrenner (9) der Brenneranordnung (5) zum Verbrennen des hinsichtlich seines Sauerstoffanteils reduzierten Verbrennungsabgases mit einem Brennstoffgas,
- mit einer Turbine (4) zum Entspannen des Verbrennungsabgases des Nachbrenners (9),
- mit einer Spülgaseinrichtung (17) zum Abführen des dem Verbrennungsabgas des Vorbrenners (8) entzogenen Sauerstoffs mittels eines Spülgases aus der Sauerstoffentziehungseinrichtung (11),
- wobei ein Synthesegasgenerator (24) vorgesehen ist zum Erzeugen eines Wasserstoffgas enthaltenden Synthesegases aus einem Brennstoff, aus Wasserstoff und aus Sauerstoffgas,
- wobei der Synthesegasgenerator (24) zur Versorgung mit dem dem Verbrennungsabgas des Vorbrenners (8) entzogenen Sauerstoffgas an die Sauerstoffentziehungseinrichtung (11) angeschlossen ist,
- wobei der Synthesegasgenerator (24) an den Vorbrenner (8) und/oder an den Nachbrenner (9) zur Versorgung mit Synthesegas als Brennstoffgas angeschlossen ist,
- wobei eine Dampferzeugungseinrichtung (51) vorgesehen ist, die in einen Abgaspfad (52) der Turbine (4) eingebunden ist und die mit Hilfe eines Turbinenabgases eine Flüssigkeit, insbesondere Wasser, verdampft, wobei gleichzeitig das Turbinenabgas abgekühlt wird,
**dadurch gekennzeichnet,**
- **dass** das Spülgas ein inertes oder zumindest ein brennstofffreies Gas ist,
- **dass** die Dampferzeugungseinrichtung (51) den Dampf mit einem Hochdruck beaufschlagt,
- **dass** der Hochdruckdampf in einer Dampfturbine (53) entspannt wird, und
- **dass** der Dampfturbine (53) ein teilweise entspannter Dampf als Mitteldruckdampf entnommen und dem Synthesegas stromauf des Vorbrenners (8) und/oder des Nachbrenners (9) zugemischt wird.

16. Kraftwerksanlage nach Anspruch 15,
**dadurch gekennzeichnet,**
**dass** der Synthesegasgenerator (24) eine Vergasungseinrichtung (30) aufweist, die aus einem Kohlenstoff enthaltenden Rohbrennstoff, aus Wasserdampf und aus Sauerstoffgas das Wasserstoffgas enthaltende Synthesegas erzeugt.

17. Kraftwerksanlage nach Anspruch 15 oder 16,
**dadurch gekennzeichnet,**
**dass** in einem Synthesegaspfad (29), der vom Synthesegasgenerator (24) zum Vorbrenner (8) und/oder zum Nachbrenner (9) führt, ein Synthesegaskühler (32) und/oder eine Synthesegasreinigungseinrichtung (31) angeordnet ist.

18. Kraftwerksanlage nach Anspruch 17,
**dadurch gekennzeichnet,**
**dass** der Synthesegaskühler (32) zum Verdampfen einer Flüssigkeit dient.

19. Kraftwerksanlage nach Anspruch 17 oder 18,
**dadurch gekennzeichnet,**
- **dass** die Synthesegasreinigungseinrichtung (31) eine Staubentfernungseinrichtung (34) zum Entfernen von tröpfchenförmigen und/oder partikelförmigen Verunreinigungen aus dem Synthesegas mittels Trägheitskräften aufweist, und/oder
- **dass** die Synthesegasreinigungseinrichtung (31) eine Gaswascheinrichtung (36) zum Auswaschen von tröpfchenförmigen und/oder partikelförmigen Verunreinigungen aus dem Synthesegas mittels einer Waschflüssigkeit aufweist, und/oder
- **dass** die Synthesegasreinigungseinrichtung (31) eine Entschwefelungseinrichtung (38) zum Entziehen von Schwefel und/oder Schwefelverbindungen, zum Beispiel Schwefelwasserstoff, aus dem Synthesegas aufweist, und/oder
- **dass** die Synthesegasreinigungseinrichtung (31) eine Entkarbonisierungseinrichtung (40) zum Entziehen von Kohlenstoff und/oder Kohlenstoffverbindungen, zum Beispiel Kohlenmonoxid und/oder Kohledioxid, aus dem Synthesegas aufweist.

20. Kraftwerksanlage nach Anspruch 19,
**dadurch gekennzeichnet,**
- **dass** die Entkarbonisierungseinrichtung (40) einen Reaktor (41) aufweist, der im Synthesegas Kohlenmonoxid in Kohlendioxid aufoxidiert, und/oder
- **dass** die Entkarbonisierungseinrichtung (40) eine Kohlendioxidentfernungseinrichtung (43) aufweist, die dem Synthesegas Kohlendioxid entzieht.

21. Kraftwerksanlage nach Anspruch 15,
**dadurch gekennzeichnet,**
- **dass** die Sauerstoffentziehungseinrichtung (11) wenigstens eine Sauerstoff-Transport-Membran (12) aufweist, die eine Entziehungsseite (13) und eine Anreicherungsseite (14) aufweist,
- **dass** der Vorbrenner (8) zum Zuführen der Verbrennungsabgase des Vorbrenners (8) an die Entziehungsseite (13) angeschlossen ist,
- **dass** die Membran (12) dem Verbrennungsabgas des Vorbrenners (8) Sauerstoffgas dadurch entzieht, dass sie den Sauerstoff von der Entziehungsseite (13) durch die Membran (12) hindurch an die Anreicherungsseite (14) transportiert.

22. Kraftwerksanlage nach Anspruch 21,
**dadurch gekennzeichnet,**
**dass** die Spülgaseinrichtung (17) an die Anreicherungsseite (14) der Sauerstoffentziehungseinrichtung (11) angeschlossen ist und dieser das Spülgas zum Aufnehmen und Abtransportieren des an der Anreicherungsseite (14) der Membran (12) bereitgestellten Sauerstoffgases zuführt.

23. Kraftwerksanlage nach Anspruch 22,
**dadurch gekennzeichnet,**
**dass** eine Sauerstoff-Spülgas-Trenneinrichtung (18) vorgesehen ist, die stromab der Sauerstoffentziehungseinrichtung (11) in einen Spülgaspfad (23) der Spülgaseinrichtung (17) eingebunden ist und die dem zugeführten Spülgas das mitgeführte Sauerstoffgas entzieht.

24. Kraftwerksanlage nach Anspruch 23,
**dadurch gekennzeichnet,**
- **dass** das Spülgas ein Flüssigkeitsdampf ist,
- **dass** die Sauerstoff-Spülgas-Trenneinrichtung (18) die Flüssigkeit durch Auskondensieren vom Sauerstoff trennt.

25. Kraftwerksanlage nach Anspruch 24,
**dadurch gekennzeichnet,**
**dass** ein Wärmeübertrager (5) vorgesehen ist, der einerseits im Spülgaspfad (23) zwischen der Sauerstoffentziehungseinrichtung (11) und der Sauerstoff-Spülgas-Trenneinrichtung (18) angeordnet ist und durch den andererseits die auskondensierte Flüssigkeit verdampft und in den Spülgaspfad (23) zurückgeführt wird.

26. Kraftwerksanlage nach einem der Ansprüche 15 bis 25,
**dadurch gekennzeichnet,**
**dass** der Vorbrenner (8) als Niedertemperaturbrenner ausgebildet ist, während der Nachbrenner (9) als Hochtemperaturbrenner ausgebildet ist.

27. Kraftwerksanlage nach Anspruch 26,
**dadurch gekennzeichnet,**
**dass** der Niedertemperaturbrenner (8) als katalytischer Brenner ausgebildet ist und/oder mit einer katalytischen Verbrennung arbeitet.

## Claims

1. Method for operating a power generating plant (2) which has at least one compressor (3), at least one turbine (4) and at least one burner arrangement (5),
- in which an oxidator gas containing an oxygen gas is compressed in the compressor (3),
- in which the compressed oxidator gas is lean burned with a fuel gas in at least one pre-burner (8) of the burner arrangement (5),
- in which a combustion exhaust gas from the pre-burner (8) is supplied to an oxygen extraction device (11) which extracts from the combustion exhaust gas part of the oxygen gas contained therein,
- in which the combustion exhaust gas with reduced oxygen content is burned with a fuel gas downstream of the oxygen extraction device (11) in at least one after-burner (9) of the burner arrangement (5),
- in which a combustion exhaust gas from the after-burner (9) is supplied to the turbine (4) and expanded therein,
- in which the oxygen extracted from the combustion exhaust gas of the pre-burner (8) is removed from the oxygen extraction device (11) by means of a flushing gas,
- wherein a synthetic gas generator (24) is provided which generates a synthetic gas containing hydrogen gas from a fuel, from water vapour and from oxygen gas,
- wherein the oxygen gas extracted from the combustion exhaust gas of the preburner (8) by means of the oxygen extraction device (11) is used to supply the synthetic gas generator (24) with oxygen gas,
- wherein the synthetic gas generated by the synthetic gas generator (24) is supplied to the pre-burner (8) and/or to the after-burner (9) as a fuel gas,
- wherein a steam generating device (51) is provided which is incorporated in an exhaust gas path (52) of the turbine (4) and which evaporates a fluid, in particular water, by means of a turbine exhaust gas, wherein at the same time the turbine exhaust gas is cooled,
**characterised in that**
- as a flushing gas, an inert gas or at least a gas free from fuel is used,
- the steam generating device (51) subjects the steam to a high pressure,
- the high-pressure steam is expanded in a steam turbine (53), and
- a partially expanded steam is extracted from the steam turbine (53) as a medium-pressure steam and mixed in with the synthetic gas upstream of the pre-burner (8) and/or the after-burner (9).

2. Method according to claim 1, **characterised in that** the synthetic gas generator (24) has a gasification device (30) which generates the synthetic gas containing hydrogen gas from a raw fuel containing carbon, from water vapour and from oxygen gas.

3. Method according to claim 1 or 2, **characterised in that** a synthetic gas cooler (32) and/or a synthetic gas cleaning device (31) is arranged in a synthetic gas path (29) which leads from the synthetic gas generator (24) to the pre-burner (8) and/or to the after-burner (9).

4. Method according to claim 3, **characterised in that** the synthetic gas cooler (32) is used to evaporate a fluid.

5. Method according to claim 3 or 4, **characterised in that**
- the synthetic gas cleaning device (31) comprises a dust removal device (34) which removes droplet-like and/or particulate contaminants from the synthetic gases by means of inertia forces, and/or
- the synthetic gas cleaning device (31) comprises a gas washing device (36) which washes out the droplet-like and/or particulate contaminants from the synthetic gas by means of a washing fluid, and/or
- the synthetic gas cleaning device (31) contains a desulphurisation device (38) which extracts sulphur and/or sulphur compounds, e.g. hydrogen sulphide, from the synthetic gas, and/or
- the synthetic gas cleaning device (31) comprises a decarbonisation device (40) which extracts carbon and/or carbon compounds, e.g. carbon monoxide and/or carbon dioxide, from the synthetic gas.

6. Method according to claim 5, **characterised in that**
- the decarbonisation device (40) comprises a reactor (41) which oxidises carbon monoxide into carbon dioxide in the synthetic gas, and/or
- the decarbonisation device (40) comprises a carbon dioxide removal device (43) which extracts carbon dioxide from the synthetic gas.

7. Method according to claim 1, **characterised in that**
- the oxygen extraction device (11) has at least one oxygen transport membrane (12) comprising an extraction side (13) and an enrichment side (14),
- the combustion exhaust gas from the pre-burner (8) is supplied to the extraction side (13),
- the membrane (12) extracts oxygen gas from the combustion exhaust gas and provides this to the enrichment side (14) through the membrane (12).

8. Method according to claim 7, **characterised in that**
- a flushing gas device (17) is provided which is connected to the oxygen extraction device (11) and supplies flushing gas to this,
- the flushing gas receives the oxygen gas provided on the enrichment side (14) of the membrane (12) and transports this away.

9. Method according to claim 8, **characterised in that**
- an oxygen/flushing gas separating device (18) is provided which is incorporated in a flushing gas path (23) of the flushing gas device (17) downstream of the oxygen extraction device (11),
- the oxygen/flushing gas separating device (18) extracts the carried oxygen gas from the supplied flushing gas.

10. Method according to claim 9, **characterised in that**
- a liquid vapour is used as a flushing gas,
- the liquid is condensed out in the oxygen/flushing gas separating device (18) and thus separated from the oxygen.

11. Method according to claim 10, **characterised in that** a heat transmitter (5) is provided which firstly is arranged in the flushing gas path (23) between the oxygen extraction device (11) and the oxygen/flushing gas separating device (12), and by means of which secondly the condensed liquid is evaporated and returned to the flushing gas path (12).

12. Method according to any of claims 1 to 11, **characterised in that** the pre-burner (8) is configured as a low-temperature burner while the after-burner (9) is configured as a high-temperature burner.

13. Method according to claim 12, **characterised in that**
- the pre-burner (8) works in a temperature range from 750°C to 1000°C, and/or
- the pre-burner (8) works in a pressure range from 15 bar to 30 bar, and/or
- the after-burner (9) works in a temperature range from 1200°C to 1450°C, and/or
- the after-burner (9) works in a pressure range from 1 bar to 5 bar.

14. Method according to claim 12 or 13, **characterised in that** the low-temperature burner (8) is configured as a catalytic burner and/or works with catalytic combustion.

15. Power generating plant, in particular for electricity generation,
- with a compressor (3) for compressing an oxidator gas containing an oxygen gas,
- with at least one pre-burner (8) of a burner arrangement (5) for lean combustion of the compressed oxidator gas with a fuel gas,
- with an oxygen extraction device (11) for extracting part of the oxygen gas from the combustion exhaust gas from the pre-burner (8),
- with at least one after-burner (9) of the burner arrangement (5) for combustion of the combustion exhaust gas with reduced oxygen proportion with a fuel gas,
- with a turbine (4) for expansion of the combustion exhaust gas from the after-burner (9),
- with a flushing gas device (17) for removing the oxygen, which was extracted from the combustion exhaust gas of the pre-burner (8), from the oxygen extraction device (11) by means of a flushing gas,
- wherein a synthetic gas generator (24) is provided for generating a synthetic gas containing hydrogen gas from a fuel, from hydrogen and from oxygen gas,
- wherein the synthetic gas generator (24) is connected to the oxygen extraction device (11) for supply with the oxygen gas extracted from the combustion exhaust gas of the pre-burner (8),
- wherein the synthetic gas generator (24) is connected to the pre-burner (8) and/or to the after-burner (9) for supply with synthetic gas as a fuel gas,
- wherein a steam generating device (51) is provided which is incorporated in an exhaust path (52) of the turbine (4) and which evaporates a liquid, in particular water, by means of a turbine exhaust gas, wherein at the same time the turbine exhaust gas is cooled,
**characterised in that**
- the flushing gas is an inert gas or at least a gas free from fuel,
- the steam generating device (51) subjects the steam to a high pressure,
- the high-pressure steam is expanded in a steam turbine (53), and
- a partially expanded steam is extracted from the steam turbine (53) as a medium-pressure steam and mixed with the synthetic gas upstream of the pre-burner (8) and/or after-burner (9).

16. Power generating plant according to claim 15, **characterised in that** the synthetic gas generator (24) has a gasification device (30) which generates synthetic gas containing hydrogen gas from a raw fuel containing carbon, from water vapour and from oxygen gas.

17. Power generating plant according to claim 15 or 16, **characterised in that** a synthetic gas cooler (32) and/or a synthetic gas cleaning device (31) is arranged in a synthetic gas path (29) which leads from the synthetic gas generator (24) to the pre-burner (8) and/or to the after-burner (9).

18. Power generating plant according to claim 17, **characterised in that** the synthetic gas cooler (32) serves to evaporate a liquid.

19. Power generating plant according to claim 17 or 18, **characterised in that**
- the synthetic gas cleaning device (31) comprises a dust removal device (34) for removing droplet-like and/or particulate contaminants from the synthetic gases by means of inertia forces, and/or
- the synthetic gas cleaning device (31) comprises a gas washing device (36) for washing out droplet-like and/or particulate contaminants from the synthetic gas by means of a washing fluid, and/or
- the synthetic gas cleaning device (31) contains a desulphurisation device (38) for extracting sulphur and/or sulphur compounds, e.g. hydrogen sulphide, from the synthetic gas, and/or
- the synthetic gas cleaning device (31) comprises a decarbonisation device (40) for extracting carbon and/or carbon compounds, e.g. carbon monoxide and/or carbon dioxide, from the synthetic gas.

20. Power generating plant according to claim 19, **characterised in that**
- the decarbonisation device (40) comprises a reactor (41) which oxidises carbon monoxide into carbon dioxide in the synthetic gas, and/or
- the decarbonisation device (40) comprises a carbon dioxide removal device (43) which extracts carbon dioxide from the synthetic gas.

21. Power generating plant according to claim 15, **characterised in that**
- the oxygen extraction device (11) has at least one oxygen transport membrane (12) comprising an extraction side (13) and an enrichment side (14),
- the pre-burner (8) is connected to the extraction side (13) for the supply of combustion exhaust gas from the pre-burner (8)
- the membrane (12) extracts oxygen gas from the combustion exhaust gas of the pre-burner (8) **in that** it transports the oxygen from the extraction side (13) through the membrane (12) to the enrichment side (14).

22. Power generating plant according to claim 21, **characterised in that** the flushing gas device (17) is connected to the enrichment side (14) of the oxygen extraction device (11) and supplies flushing gas to this for receiving and transporting away the oxygen gas provided on the enrichment side (14) of the membrane (12).

23. Power generating plant according to claim 22, **characterised in that** an oxygen/flushing gas separating device (18) is provided which is incorporated in a flushing gas path (23) of the flushing gas device (17) downstream of the oxygen extraction device (11), and which extracts the carried oxygen gas from the supplied flushing gas.

24. Power generating plant according to claim 23, **characterised in that**
- the flushing gas is a liquid vapour,
- the oxygen/flushing gas separating device (18) separates the liquid from the oxygen by condensing out.

25. Power generating plant according to claim 24, **characterised in that** a heat transmitter (5) is provided which firstly is arranged in the flushing gas path (23) between the oxygen extraction device (11) and the oxygen/flushing gas separating device (12), and by means of which secondly the condensed liquid is evaporated and returned to the flushing gas path (12).

26. Power generating plant according to any of claims 15 to 25, **characterised in that** the pre-burner (8) is configured as a low-temperature burner while the after-burner (9) is configured as a high-temperature burner.

27. Power generating plant according to claim 26, **characterised in that** the low-temperature burner (8) is configured as a catalytic burner and/or works with catalytic combustion.

## Revendications

1. Procédé d'exploitation d'une centrale énergétique (2) qui comprend au moins un compresseur (3), au moins une turbine (4) et au moins un dispositif de combustion (5),
- dans lequel, dans le compresseur (3), un gaz oxydant contenant de l'oxygène gazeux est comprimé,
- dans lequel le gaz oxydant comprimé est brûlé à l'aide d'un mélange pauvre dans un gaz combustible dans au moins un dispositif de pré-combustion (8) du dispositif de combustion (5),
- dans lequel un gaz d'échappement de combustion du dispositif de pré-combustion (8) est introduit dans un dispositif d'extraction d'oxygène (11) qui extrait du gaz d'échappement de combustion une partie de l'oxygène gazeux contenu dans celui-ci,
- dans lequel le gaz d'échappement de combustion dont la teneur en oxygène est réduite est brûlé en aval du dispositif d'extraction d'oxygène (11) dans au moins un dispositif de post-combustion (9) du dispositif de combustion (5) avec un gaz combustible,
- dans lequel un gaz d'échappement de combustion du dispositif de post-combustion (9) est introduit dans la turbine (4) puis détendu,
- dans lequel l'oxygène extrait du gaz d'échappement de combustion du dispositif de pré-combustion (8) est évacué au moyen d'un gaz de purge hors du dispositif d'extraction d'oxygène (11),
- un générateur de gaz de synthèse (24) étant prévu, qui génère, à partir d'un carburant, de vapeur d'eau et d'oxygène gazeux, un gaz de synthèse contenant de l'hydrogène gazeux,
- l'oxygène gazeux extrait à l'aide du dispositif d'extraction d'oxygène (11) du gaz d'échappement de combustion du dispositif de pré-combustion (8) étant utilisé pour l'alimentation du générateur de gaz de synthèse (24) en oxygène gazeux
- le gaz de synthèse généré par le générateur de gaz de synthèse (24) étant introduit dans le dispositif de pré-combustion (8) et/ou le dispositif de post-combustion (9) en tant que gaz combustible,
- un dispositif de génération de vapeur (51) étant prévue, qui est intégrée dans un trajet de gaz d'échappement (52) de la turbine (4) et qui provoque l'évaporation d'un liquide, plus particulièrement de l'eau, à l'aide d'un gaz d'échappement de turbine, le gaz d'échappement de turbine étant simultanément refroidi,
**caractérisé en ce que**
- un gaz inerte ou au moins non combustible est utilisé comme gaz de purge,
- le dispositif de génération de vapeur (51) pressurise la vapeur avec une haute pression,
- la vapeur sous haute pression est détendue dans une turbine à vapeur (53) et
- une vapeur partiellement détendue est prélevée dans la turbine à vapeur (53) en tant que vapeur sous moyenne pression et mélangée au gaz de synthèse en amont du dispositif de pré-combustion (8) et/ou du dispositif de post-combustion (9).

2. Procédé selon la revendication 1,
**caractérisé en ce que**
le générateur de gaz de synthèse (24) comprend un dispositif de gazéification (30) qui génère, à partir d'un carburant brut contenant du carbone, de vapeur d'eau et d'oxygène gazeux, le gaz de synthèse contenant l'hydrogène gazeux.

3. Procédé selon la revendication 1 ou 2,
**caractérisé en ce que**
dans un trajet de gaz de synthèse (29), qui conduit du générateur de gaz de synthèse (24) vers le dispositif de pré-combustion (8) et/ou le dispositif de post-combustion (9), se trouve un dispositif de refroidissement de gaz de synthèse (32) et/ou un dispositif de nettoyage de gaz de synthèse (31).

4. Procédé selon la revendication 3,
**caractérisé en ce que**
le dispositif de refroidissement de gaz de synthèse (32) est utilisé pour l'évaporation d'un liquide.

5. Procédé selon la revendication 3 ou 4,
**caractérisé en ce que**
- le dispositif de nettoyage de gaz de synthèse (31) comprend un dispositif d'élimination de poussière (34) qui élimine les impuretés sous forme de gouttelettes et/ou de particules du gaz de synthèse à l'aide des forces d'inertie et/ou
- le dispositif de nettoyage de gaz de synthèse (31) comprend un dispositif de lavage de gaz (36) qui lessive les impuretés sous forme de gouttelettes et/ou de particules du gaz de synthèse au moyen d'un liquide de lavage et/ou
- le dispositif de nettoyage de gaz de synthèse (31) comprend un dispositif de désulfuration (38) qui extrait le soufre et/ou les composés soufrés du gaz de synthèse et/ou
- le dispositif de nettoyage de gaz de synthèse (31) comprend un dispositif de décarbonisation (40) qui extrait le carbone et/ou les composés carbonés, par exemple le monoxyde de carbone et/ou le dioxyde de carbone, du gaz de synthèse.

6. Procédé selon la revendication 5,
**caractérisé en ce que**
- le dispositif de décarbonisation (40) comprend un réacteur (41) qui oxyde, dans le gaz de synthèse, le monoxyde de carbone en dioxyde de carbone, et/ou
- le dispositif de décarbonisation (40) comprend un dispositif d'élimination du dioxyde de carbone (43) qui extrait le dioxyde de carbone du gaz de synthèse.

7. Procédé selon la revendication 1,
**caractérisé en ce que**
- le dispositif d'extraction d'oxygène (11) comprend au moins une membrane de transport de l'oxygène (12) qui comprend un côté d'extraction (13) et un côté d'enrichissement (14),
- le gaz d'échappement de combustion du dispositif de pré-combustion (8) est introduit sur le côté d'extraction (13),
- la membrane (12) extrait du gaz d'échappement de combustion l'oxygène gazeux et transporte celui-ci à travers la membrane (12) vers le côté d'enrichissement (14).

8. Procédé selon la revendication 7,
**caractérisé en ce que**
- un dispositif de gaz de purge (17) est prévu, qui est relié au dispositif d'extraction d'oxygène (11) et qui introduit le gaz de purge dans celui-ci,
- le gaz de purge prend en charge et transporte l'oxygène gazeux disponible sur le côté d'enrichissement (14) de la membrane (12).

9. Procédé selon la revendication 8,
**caractérisé en ce que**
- un dispositif de séparation de l'oxygène et du gaz de purge (18) est prévu, qui est intégré en aval du dispositif d'extraction d'oxygène (11) dans un trajet de gaz de purge (23) du dispositif de gaz de purge (17),
- le dispositif de séparation de l'oxygène et du gaz de purge (18) extrait du gaz de purge introduit l'oxygène gazeux entraîné.

10. Procédé selon la revendication 9,
**caractérisé en ce que**
- une vapeur de liquide est utilisée en tant que gaz de purge,
- le liquide est condensé et ainsi séparé de l'oxygène dans le dispositif de séparation de l'oxygène et du gaz de purge (18).

11. Procédé selon la revendication 10,
**caractérisé en ce que**
un échangeur thermique (5) est prévu, qui est disposé d'une part dans le trajet de gaz de purge (23) entre le dispositif d'extraction d'oxygène (11) et le dispositif de séparation de l'oxygène et du gaz de purge (18) et qui permet, d'autre part de provoquer l'évaporation du liquide condensé et de le retourner dans le trajet du gaz de purge (23).

12. Procédé selon l'une des revendications 1 à 11,
**caractérisé en ce que**
le dispositif de pré-combustion (8) est conçu comme un dispositif de combustion à basse température tandis que le dispositif de post-combustion (9) est conçu comme un dispositif de combustion à haute température.

13. Procédé selon la revendication 12,
**caractérisé en ce que**
- le dispositif de pré-combustion (8) fonctionne dans une plage de température de 750 °C à 1000 °C et/ou
- le dispositif de pré-combustion (8) fonctionne dans une plage de pression de 15 bar à 30 bar et/ou
- le dispositif de post-combustion (9) fonctionne dans une plage de température de 1200 °C à 1450 °C et/ou
- le dispositif de post-combustion (9) fonctionne dans une plage de pression de 1 bar à 5 bar.

14. Procédé selon la revendication 12 ou 13,
**caractérisé en ce que**
le dispositif de combustion à basse température (8) est conçu comme un dispositif de combustible catalytique et/ou fonctionne avec une combustion catalytique.

15. Centrale énergétique, plus particulièrement pour la production d'électricité,
- avec un compresseur (3) pour la compression d'un gaz oxydant contenant de l'oxygène gazeux,
- avec au moins un dispositif de pré-combustion (8) d'un dispositif de combustion (5) pour la combustion pauvre du gaz oxydant comprimé avec un gaz combustible,
- avec un dispositif d'extraction d'oxygène (11) pour l'extraction d'une partie de l'oxygène gazeux du gaz d'échappement de combustion du dispositif de pré-combustion (8),
- avec au moins un dispositif de post-combustion (9) du dispositif de combustion (5) pour la combustion du gaz d'échappement de combustion, dont la teneur en oxygène est réduite, avec un gaz combustible,
- avec une turbine (4) pour la détente du gaz d'échappement de combustion du dispositif de post-combustion (9),
- avec un dispositif de gaz de purge (17) pour l'évacuation de l'oxygène extrait du gaz d'échappement de combustion du dispositif de pré-combustion (8) au moyen d'un gaz de purge, hors du dispositif d'extraction d'oxygène (11),
- un générateur de gaz de synthèse (24) étant prévu pour la génération d'un gaz de synthèse contenant de l'hydrogène gazeux à partir d'un carburant, d'hydrogène et d'oxygène gazeux,
- le générateur de gaz de synthèse (24) étant relié, pour l'alimentation en oxygène gazeux extrait du gaz d'échappement de combustion du dispositif de pré-combustion (8), au dispositif d'extraction d'oxygène (11),
- le générateur de gaz de synthèse (24) étant relié au dispositif de pré-combustion (8) et/ou au dispositif de post-combustion (8) pour l'alimentation en gaz de synthèse en tant que gaz combustible,
- un dispositif de génération de vapeur (51) étant prévu, qui est intégré dans un trajet de gaz d'échappement (52) de la turbine (4) et qui provoque, à l'aide d'un gaz d'échappement de turbine, l'évaporation d'un liquide, plus particulièrement d'eau, le gaz d'échappement de la turbine étant simultanément refroidi,
**caractérisée en ce que**
- le gaz de purge est un gaz inerte ou au moins un gaz non combustible,
- le dispositif de génération de vapeur (51) pressurise la vapeur avec une haute pression,
- la vapeur sous haute pression est détendue dans une turbine à vapeur (53) et
- une vapeur partiellement détendue est prélevée dans la turbine à vapeur (53) en tant que vapeur sous moyenne pression et est mélangée au gaz de synthèse en amont du dispositif de pré-combustion (8) et/ou du dispositif de post-combustion (9).

16. Centrale énergétique selon la revendication 15,
**caractérisé en ce que**
le générateur de gaz de synthèse (24) comprend un dispositif de gazéification (30) qui génère le gaz de synthèse contenant de l'hydrogène gazeux à partir d'un carburant brut contenant du carbone, de vapeur d'eau et d'oxygène gazeux.

17. Centrale énergétique selon la revendication 15 ou 16,
**caractérisée en ce que**
dans un trajet de gaz de synthèse (29), qui conduit du générateur de gaz de synthèse (24) vers le dispositif de pré-combustion (8) et/ou le dispositif de post-combustion (9), se trouve un dispositif de refroidissement de gaz de synthèse (32) et/ou un dispositif de nettoyage de gaz de synthèse (31).

18. Centrale énergétique selon la revendication 17,
**caractérisée en ce que**
le dispositif de refroidissement de gaz de synthèse (32) sert à l'évaporation d'un liquide.

19. Centrale énergétique selon la revendication 17 ou 18,
**caractérisée en ce que**
- le dispositif de nettoyage de gaz de synthèse (31) comprend un dispositif d'élimination de poussières (34) pour l'élimination d'impuretés sous forme de gouttelettes et/ou de particules hors du gaz de synthèse à l'aide des forces d'inertie et/ou
- le dispositif de nettoyage de gaz de synthèse (31) comprend un dispositif de lavage de gaz (36) pour le lavage des impuretés sous forme de gouttelettes et/ou de particules hors du gaz de synthèse au moyen d'un liquide de lavage et/ou
- le dispositif de nettoyage de gaz de synthèse (31) comprend un dispositif de désulfuration (38) pour l'extraction du soufre et/ou des composés soufrés, par exemple l'hydrogène sulfuré, hors du gaz de synthèse et/ou
- le dispositif de nettoyage de gaz de synthèse (31) comprend un dispositif de décarbonisation (40) pour l'extraction du carbone et/ou des composés carbonées, par exemple le monoxyde de carbone et/ou le dioxyde de carbone, hors du gaz de synthèse.

20. Centrale énergétique selon la revendication 19,
**caractérisée en ce que**
- le dispositif de décarbonisation (40) comprend un réacteur (41) qui oxyde, dans le gaz de synthèse, le monoxyde de carbone en dioxyde de carbone et/ou
- le dispositif de décarbonisation (40) comprend un dispositif d'élimination du dioxyde de carbone (43) qui extrait le dioxyde de carbone du gaz de synthèse.

21. Centrale énergétique selon la revendication 15,
**caractérisée en ce que**
- le dispositif d'extraction d'oxygène (11) comprend au moins une membrane de transport d'oxygène (12) qui comprend un côté d'extraction (13) et un côté d'enrichissement (14),
- le dispositif de pré-combustion (8) est relié au côté d'extraction (13) pour l'introduction des gaz d'échappement de combustion du dispositif de pré-combustion (8),
- la membrane (12) extrait l'oxygène gazeux du gaz d'échappement de combustion du dispositif de pré-combustion (8) grâce au fait qu'elle transporte l'oxygène du côté d'extraction (13) à travers la membrane (12) vers le côté d'enrichissement (14).

22. Centrale énergétique selon la revendication 21,
**caractérisée en ce que**
le dispositif de gaz de purge (17) est relié au côté d'enrichissement (14) du dispositif d'extraction d'oxygène (11) et celui-ci introduit le gaz de purge pour la prise en charge et le transport de l'oxygène gazeux disponible sur le côté d'enrichissement (14) de la membrane (12).

23. Centrale énergétique selon la revendication 22,
**caractérisée en ce que**
un dispositif de séparation de l'oxygène et du gaz de purge (18) est prévu, qui est intégré en aval du dispositif d'extraction d'oxygène (11) dans un trajet de gaz de purge (23) du dispositif de gaz de purge (17) et qui extrait du gaz de purge introduit l'oxygène gazeux entraîné.

24. Centrale énergétique selon la revendication 23,
**caractérisée en ce que**
- le gaz de purge est une vapeur de liquide,
- le dispositif de séparation de l'oxygène et du gaz de purge (18) sépare le liquide par condensation de l'oxygène.

25. Centrale énergétique selon la revendication 24,
**caractérisée en ce que**
un échangeur thermique (5) est prévu, qui est disposé d'une part dans le trajet de gaz de purge (23) entre le dispositif d'extraction d'oxygène (11) et le dispositif de séparation de l'oxygène et du gaz de purge (18) et qui permet d'autre part de provoquer l'évaporation du liquide condensé et de le retourner dans le trajet du gaz de purge (23).

26. Centrale énergétique selon l'une des revendications 15 à 25,
**caractérisée en ce que**
le dispositif de pré-combustion (8) est conçu comme un dispositif de combustion à basse température tandis que le dispositif de post-combustion (9) est conçu comme un dispositif de combustion à haute température.

27. Centrale énergétique selon la revendication 26,
**caractérisée en ce que**
le dispositif de combustion à basse température (8) est conçu comme un dispositif de combustion catalytique et/ou fonctionne avec une combustion catalytique.
